# EUROPEAN PATENT APPLICATION

(11) **EP 2 275 189 A1**
(43) Date of publication of application: **19.01.2011**
(21) Application number: 09717682.0
(22) Date of filing: 23.02.2009
(51) Int. Cl.: B01D 47/06

(54) **ENVIRONMENTALLY FRIENDLY DEVICE FOR SLOWING GLOBAL WARMING, ALSO KNOWN AS AN EMISSION PURIFYING SYSTEM**

(30) Priority: 06.03.2008 MX 2008003569
(71) Applicant: Caraveo Martínez, Miguel Ángel, C.P. 86038 Villahermosa Tabasco (MX)
(72) Inventor: Caraveo Martínez, Miguel Ángel, C.P. 86038 Villahermosa Tabasco (MX)
(74) Representative: Beyer, Andreas
(86) International application number: PCT/MX2009/000019
(87) International publication number: WO 2009/110781

(57) **Abstract**

The invention relates to an environmentally friendly device for slowing global warming, also known as an emission purifying system, comprising a device that performs a process that eliminates pollutant gases produced by combustion, using a system comprising the pumping, cascading, bubbling, aeration, lubrication and liquefaction of the gases, in which said gases are collected and stored, thereby reducing combustion temperature and preventing global warming and acid rain, as well as eliminating the noise produced during combustion and the characteristic combustion smell and enabling the heat energy produced in the form centrifugal heat energy and vapour to be employed for different uses.

## Description

The present invention, as expressed in the statement of this descriptive memoir, refers to a global warming decelerator equipment also called emissions purificator system whose technical field or technological sector focuses on pit burners and elevated burners in the oil industry as well as incinerators, chimneys and outdoor burnings and other industries where suspended polluting particles are produced by combustion.

This invention was developed with the purpose of decelerating the world climate change caused by global warming, originated by the emission to the atmosphere of polluting gases, contributing to the reduction of acid rain, to the reduction of the temperature of the emissions as well as the noise produced by the pressure of the fuel in the burners, producing steam which produces thermal and centrifuge energy for a variety of uses, it also concentrates suspended particles and settles them in a deposit for diverse applications.

### BACKGROUND OF THE INVENTION

Global warming is a matter of serious concern due to its potential effects to human health, economy and environment. Global warming has been associated to some processes like the decrease of the amount of snow prevalent in some places, the rise of sea level and recent changes in the climate which can affect human activities and ecosystems. Some species can be forced to emigrate to avoid extinction due to changing climate conditions. Global warming can result in a rise of sea level because the water in the oceans expands when it is warmed. The melting of the polar ice shelf and glaciers also contributes to increasing the volume of liquid water in seas. Climate has always been variable. The issue with climate in the last century is that climate change has been exacerbated in an anomalous way to such extent that life on earth is now being affected. In the search of the causes of this exacerbation, scientists have found that there is a direct relation between global warming or climate change and an increase in the emissions of greenhouse gases to the atmosphere originated in industrial societies mainly.

Today, global warming and its direct effect on climate change are phenomena of worldwide concern, particularly among scientists, who spend most of their time and effort studying and learning to control them, as scientists claim that this phenomena threat the future of the human race. Many scientists agree that the increasing greenhouse gases concentration in the atmosphere is resulting in alterations in the global climate. They also agree that the emission of greenhouse gases has been more intense since the beginning of the Industrial Revolution. It has to be mentioned that all industries emit carbon monoxide, sulfur oxides and all kinds of pollutants to the atmosphere which degrade the quality of the air. In particular, pit burners and elevated outdoor burners operated by the world oil industry are probably the most pollutant devices because of the following reason:
Each burner emits not only pollutant particles but also raw heat at temperatures ranging from 1200°C to 1800°C. This constant, extreme and permanent heat in the atmosphere results giving power to air streams where storms, rains, tornados, snow storms, cyclones and heat waves are formed, causing a domino effect which affects the planet and ecosystems in a chain.

On the other hand, greenhouse gases are growing up quickly in the atmosphere because the world burns increasing quantities of fossil fuels and destroys forests and prairies which could absorb carbon dioxide and favor the equilibrium of the temperature. In view of this, the international scientific community has alerted that if the world development, the demographic growth and the energetic consumption based on fossil fuels keep growing at the actual pace, by the year 2050 the concentration of carbon dioxide will have doubled with respect to that prevalent before the industrial Revolution.

This could bring about dire consequences for life on the planet, and it could even reach the point when it would be impossible to live because of lack of oxygen or bad air quality. Every living organism which breathes would be the first to feel the impact of the latter. It is possible that there are no regions on earth which will not result affected by this enormous problem.

With the purpose of mitigating this enormous world problem was developed the Global Warming Decelerator Equipment, also called Emissions Purificator Equipment, which is intended to be protected by this application since this equipment reverts some of the negative effects caused by global warming because it produces clean energy when it is applied to sectors where there are emissions of pollutant suspended particles given off by combustion. This equipment is very efficient and has many benefits. It is worth mentioning that presently, there is no equipment with similar benefits to life, health and the planet. The use of the Global Warming Decelerator Equipment, also called Emissions Purificator System, will prevent the earth and its ecosystems, including the human race, from resulting damaged by the domino effect in chain mentioned above.

Equipment similar to the one presented here has not been found. However, there are patents which can be taken as antecedents though these patents are focused on eliminating pollutant suspended particles in motor cars and internal combustion engines, and they appear as complements to the exhaust system in some cases, and as catalyzers and filters in other cases like:
Improvements to Filter-Valve to Eliminate Toxic Fumes in Internal Combustion Engines. Appl. Num. 0196984.
Improvements to Antipollution Device for Gas or Diesel Burning Internal Combustion Engines. Appl. Num. 0002768.
Catalyst Purifying Device for Diesel Engines Exhaust Fumes, Appl. Num.9200029.
Filter Device Universally Adaptable for Retention of Pollutant Elements Found in Emissions Produced by Internal Combustion Engines Running on Liquid Hydrocarbon Fuels. Appl. Num. 9304723.
Method for Reducing Emissions in Otto Cycle Engine Exhaust Fumes. Appl. Num. 9500835.
Mini-Cascade Catalyst System. Appl. Num. 9606087.
Exhaust System for Internal Combustion Processes Effluents. Appl. Num. 9201291.
Electrolytic Pollutants Suppressor Unit. Appl. Num. 9305751.

Therefore it should be reiterated that the characteristics and multiple benefits that the present invention provides make it unique because it was developed with the purpose of decelerating the world climate change caused by global warming, which is originated in the emission of pollutant gases into the atmosphere. This invention contributes to decreasing acid rain, reducing the temperature of the emanations and the level of noise produced by the pressure of fuel in the burners, producing steam which in turns generates thermal and centrifugal energy for various purposes, it also concentrates suspended particles and settles them into a deposit for later uses.

### BRIEF DESCRIPTION OF THE INVENTION

This invention refers to a stationary air portable equipment whose purpose is to capture and collect pollutant suspended particles, to prevent clean air from getting polluted as well as preventing outdoor fire, fumes and radiated heat produced by combustion sources from reaching the atmosphere, thus decelerating global warming, it also suppresses combustion odors, reduces acid rain and allows the utilization of thermal energy in the form of steam and thermal centrifugal energy, it reduces the temperature of emissions and the noise generated by the pressure of fuel in the burners.

### BRIEF DESCRIPTION OF FIGURES

The characteristic details of this novel Global Warming Decelerator Equipment also called Emissions Purificator Equipment are shown clearly in the following description and accompanying figures as well as an illustration of the invention which uses the same reference signs to indicate the parts and figures shown.
Figure 1. This shows an isometric view of the supporting table of the vertical cone which has a square shape, it can be noticed that the central part is free of any structure.
Figure 2. This shows an isometric view of the circular channel which is element 2 whose structure has an element 3 consisting of an orifice which has a draining pipe connected to it and which is element 4.
Figure 3. This shows an isometric view of element 5, a circular beam, used to hold the vertical cone and the supporting table whose structure has four orifices oriented to the four cardinal points of element 7 and a rim or flange element 6 to fix the vertical cone.
Figure 4. This shows an isometric view of the base for the elevated tank element 8, which has a cylindrical shape, it can be noticed that in the central part it is free of any structure.
Figure 5. This shows an isometric view of an ignition sphere element 9 which consists of an external canister and mineral coal or volcanic rock in the center.
Figure 6. This shows an isometric view of the elevated thermic energy producing tank with a convex bottom element 10 with a conical type configuration as well as a bottleneck with internal and external thread element 11, to which a draining outlet has been adapted for maintenance purposes element 12 and a shutoff valve element 13.
Figure 7. This shows and isometric view of the tight-fitting lid of the elevated tank element 14 whose structure consists of: a filling system which consists of a pipe element 19, with a shutoff valve element 18 and a water volume meter element 17, valve seal element 15, the lid itself element 16 and a steam exit which consists of a pipe element 20 with a valve element 22 and a manometer element 21.
Figure 8. This shows an isometric view of the vertical cone element 23 with a tubular annular sprinkler with an external input element 24.
Figure 9. This shows an isometric view of heat diffuser discs of different diameters with concentric vacuum element 25.
Figure 10. This shows an isometric view of a cooling coil element 26.
Figure 11. This shows an isometric view of a flow distributor element 27, which consists of a ramification of connectors.
Figure 12. This shows an isometric view of a long ladder element 28 with a folding ring element 29.
Figure 13. This shows an isometric view of a short ladder element 28 with a folding ring element 29.
Figure 14. This shows an isometric view of horizontal type cone element 37 with a circular sprinkler element 35, an emergent chimney element 31, with a lid and a whip element 33, a permanent exit chimney with a filter-screening system element 36, a sprinkler system element 30, an orifice for the insertion of the vertical cone element 34 and a lightning rod element 32.
Figure 15. This shows an isometric view of a screening system element 38 and screens of different diameters element 39.
Figure 16. This shows an isometric view of an elbow with orifices element 40 and without orifices element 41.
Figure 17. This shows an isometric view of a semi-circular retainer element 42, whose structure has orifices for subjection element 43.
Figure 18. This shows the different views of the tight-fit lid of the horizontal cone along with the following perspectives; side view, top view, and bottom view with orifices with an input pipe, support handle and cover lid fixing element 44.

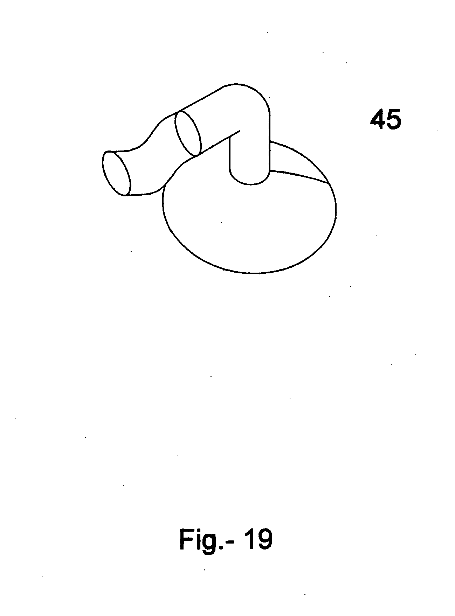

Figure 19. This shows an isometric view of a sprinkler element 45.

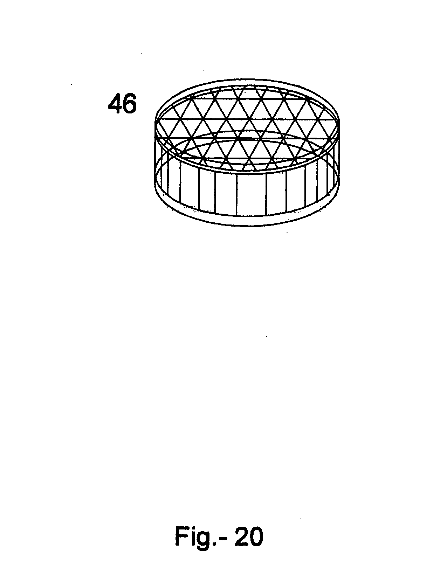

Figure 20. This shows the isomeric view of a screen element 46.
Figure 21. This shows the isometric view of a filter element 47.
Figure 22. This shows the isometric view of the base for an extractor element 48.
Figure 23. This shows the isometric view of an air extractor element 49.
Figure 24. This shows an isometric view of a pulley system element 50.
Figure 25. This shows the isometric view of a storage tank for captured particles element 51) with the cover element 52, an exit duct for a cable and the hoses of the pump system element 53, an output connector pipe from the horizontal cone element 54, a fluid peephole element 55, a metal grid element 56, a maintenance stopper element 57, an outlet to connect the particle storage tank to the hydro pneumatic tank element 58 and a level plug element 59.
Figure 26. This shows an isometric view of a submersible pump element 60, with a hydraulic outlet element 61.
Figure 27. This shows an isometric view of a hydro pneumatic tank with an air compressor element 62.
Figure 28. This shows an isometric view of a "Y" connector element 63 with shutoff valves on both arms of the "Y" connector element 64.
Figure 29. This shows an isometric view of a heat collector cylinder with a partitions integrated system element 65.
Figure 30. This shows an isometric view of all the equipment assembled.

### DETAILED DESCRIPTION OF THE INVENTION

With reference to those figures, the Global Warming Decelerator Equipment, also called Emissions Purifying System is geometrically formed by two cones, a vertical one and a horizontal one, supported on an air portable stationary metallic frame base which covers or encapsulates the combustion totally.

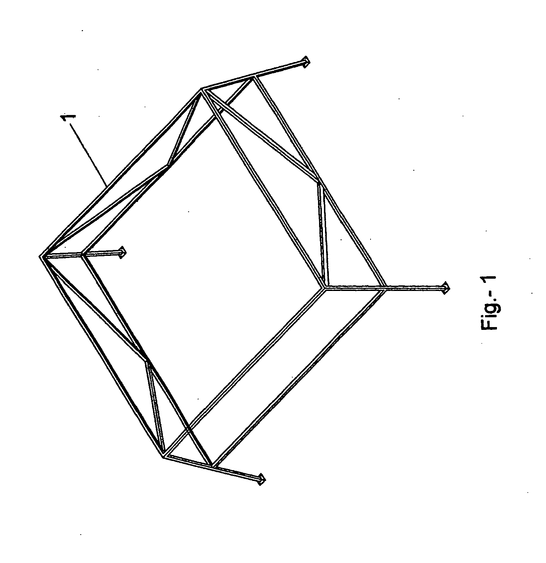

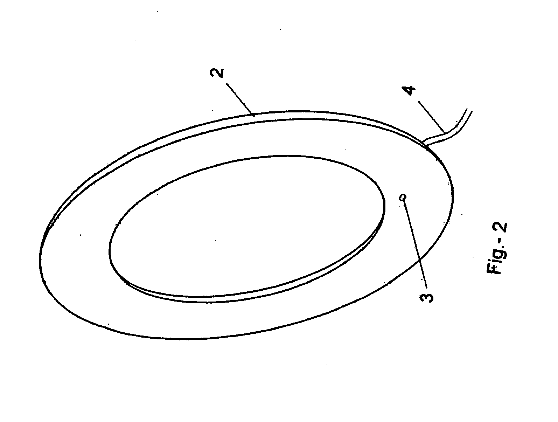

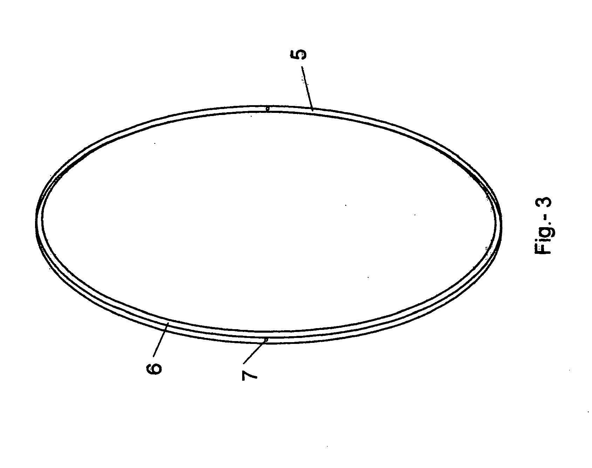

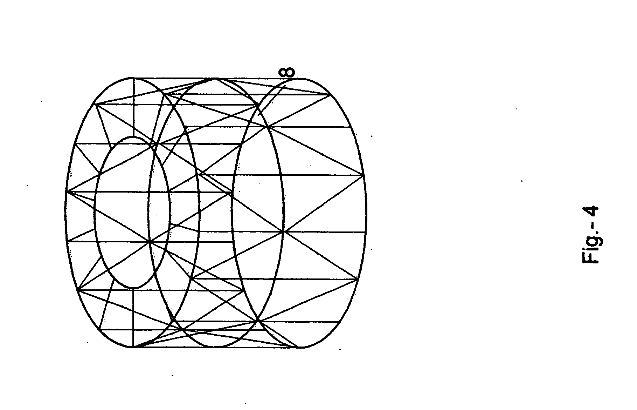

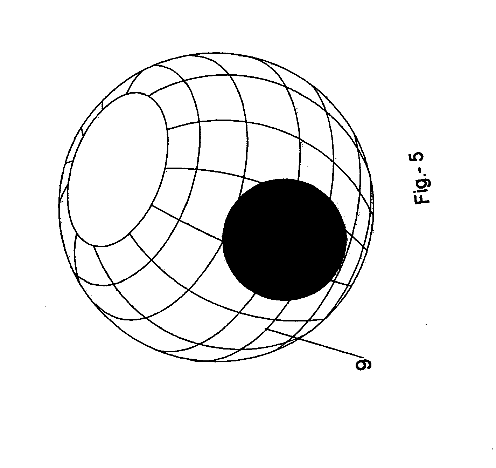

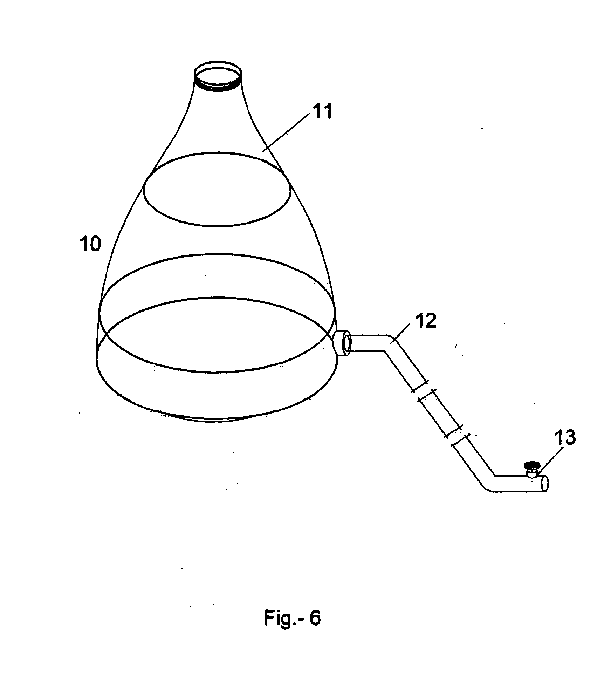

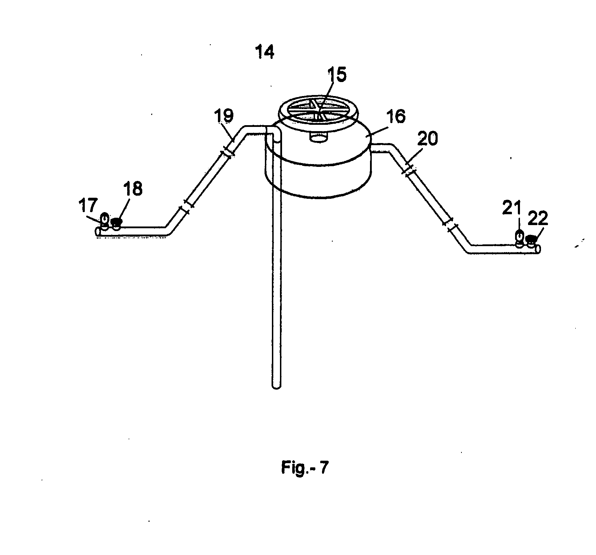

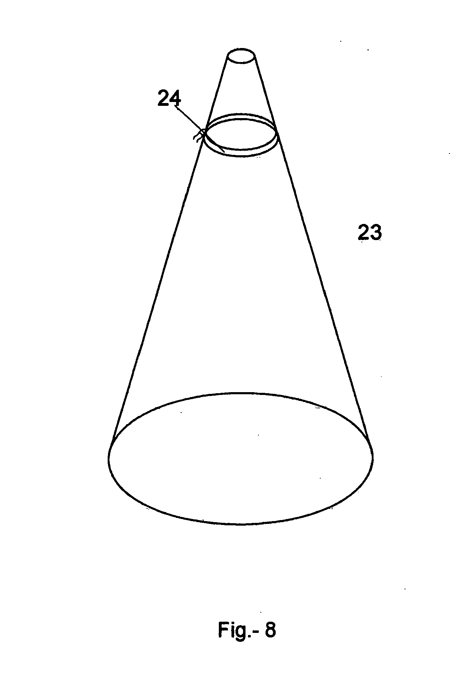

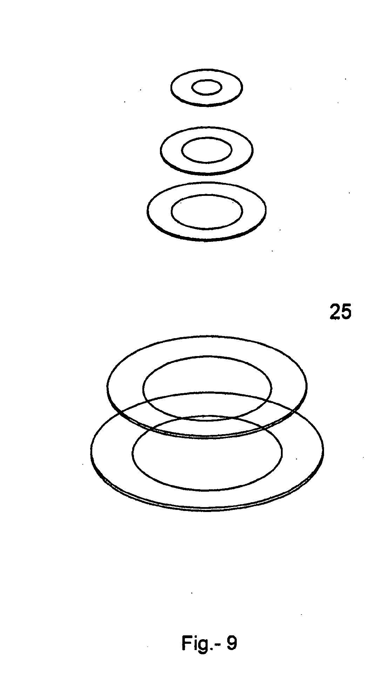

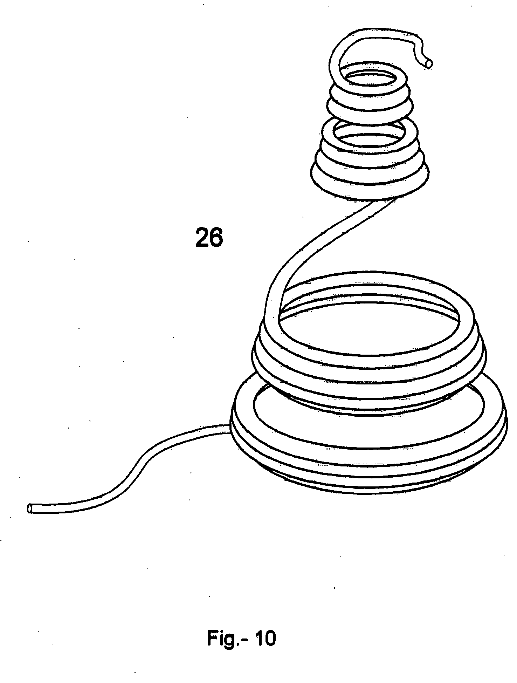

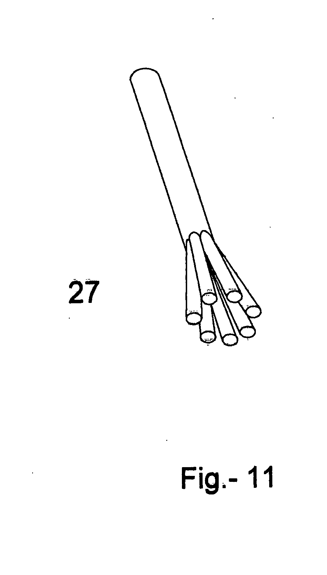

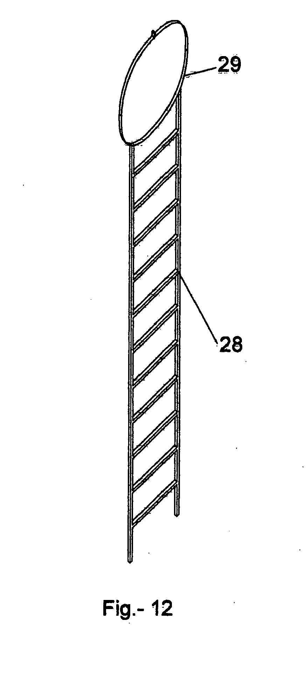

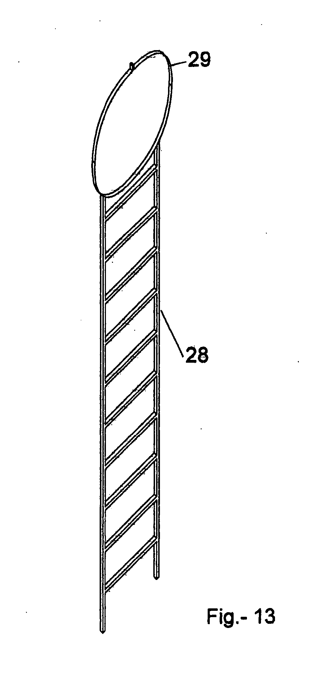

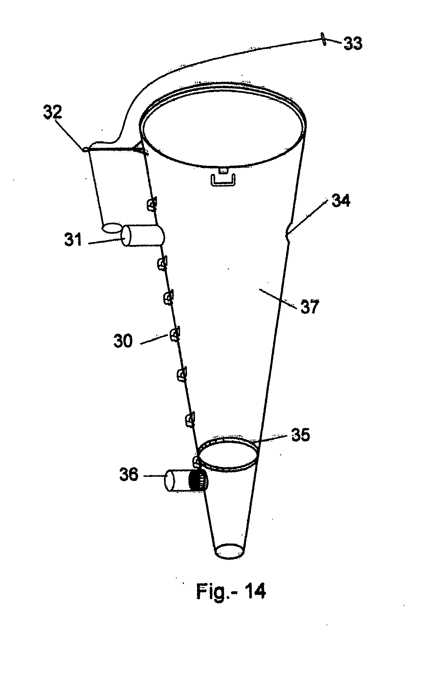

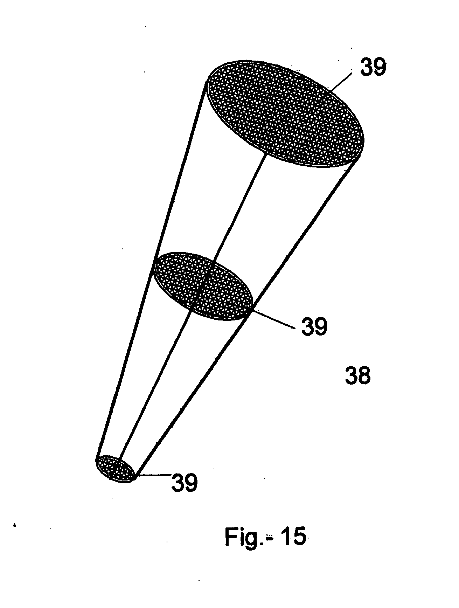

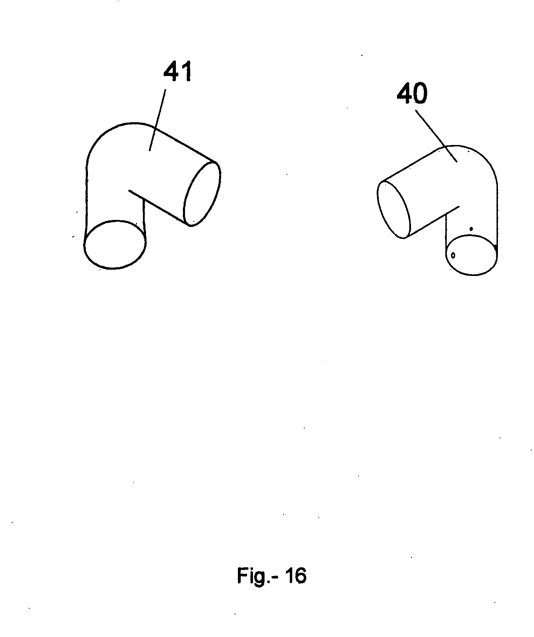

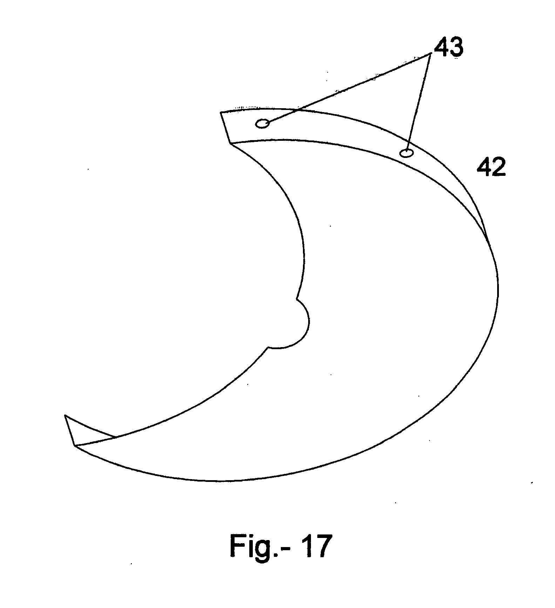

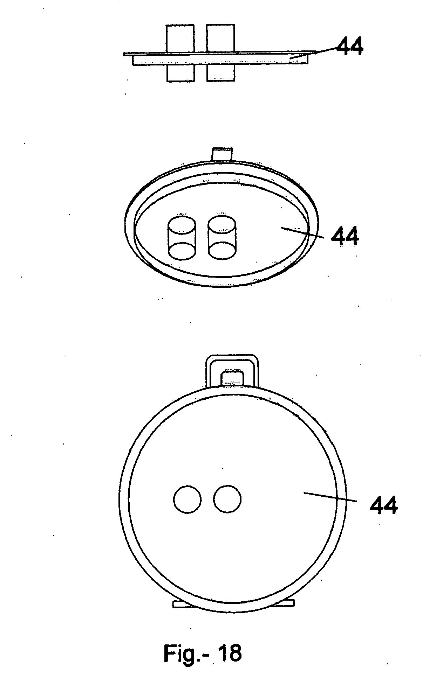

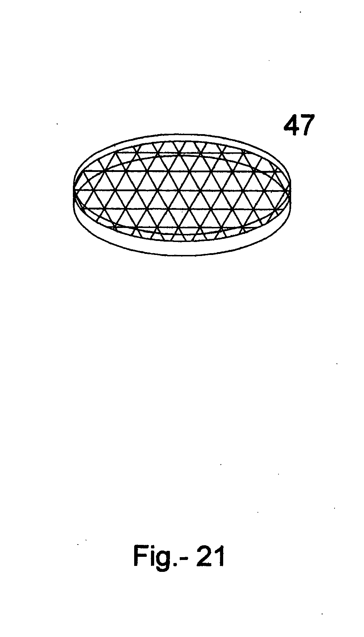

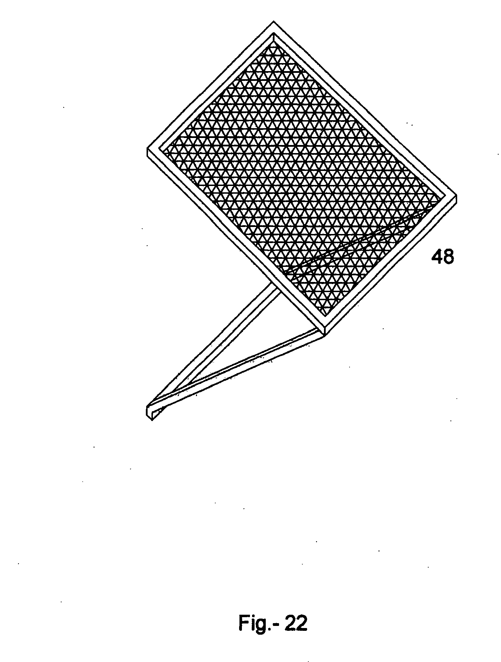

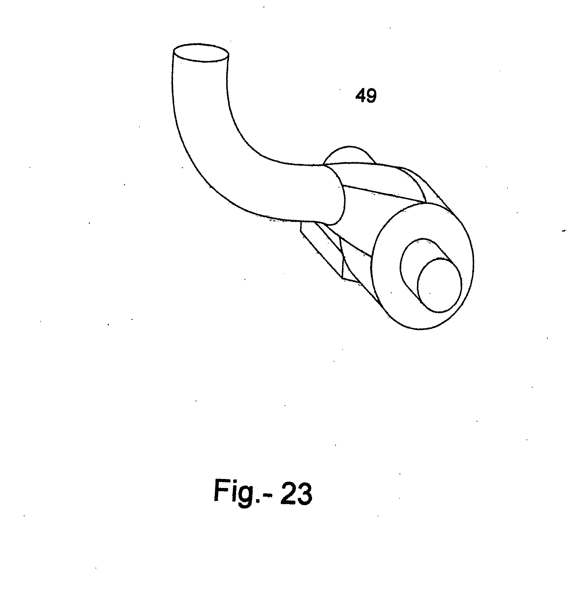

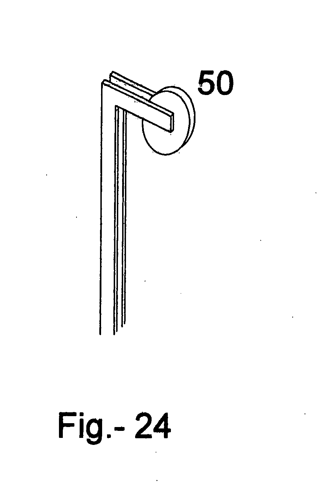

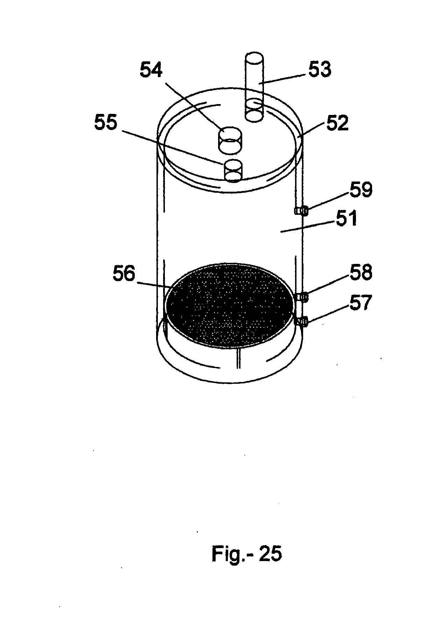

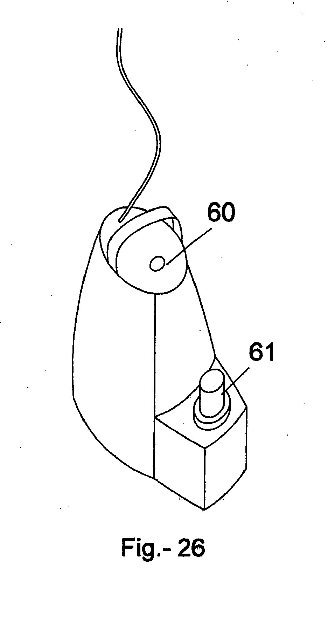

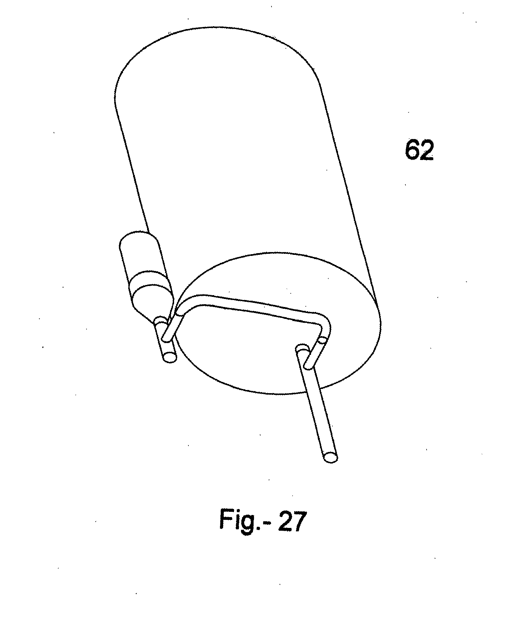

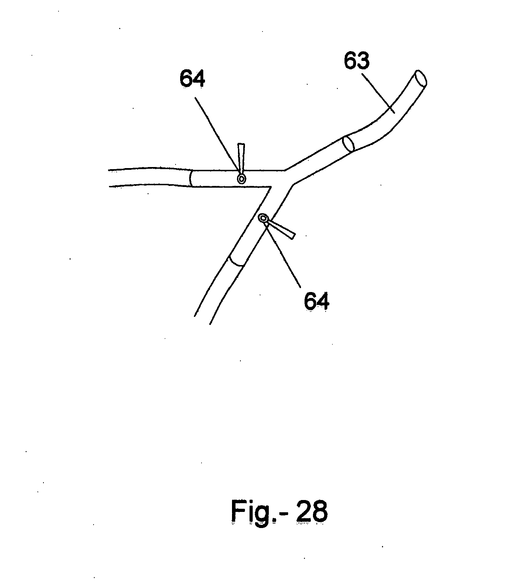

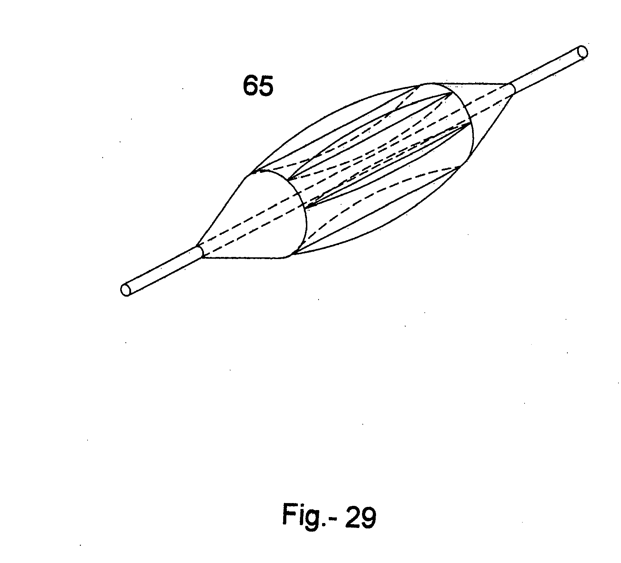

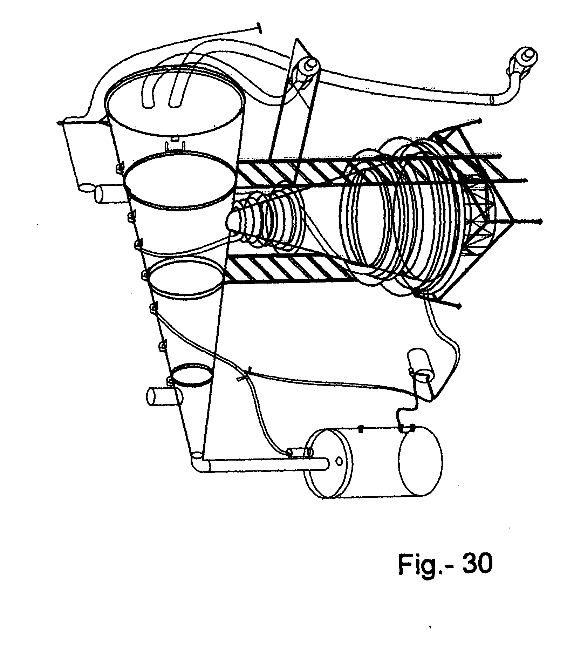

The equipment is assembled in the following way: the supporting table of the vertical cone (1) shown in Figure 1 is placed the combustion point, chimney or burner is placed inside. Now the circular channel (2) shown in Figure 2 is fitted on the supporting table of the vertical cone (1), the circular beam (5) is placed on the circular channel (5) shown in Figure 3, and it is subjected to the supporting table (1) shown in Figure 1 with 4 screws. The base for the elevated tank (8), shown in Figure 4 is introduced into the supporting table of the vertical cone (1) leaving the burner in a concentric position, now the ignition sphere (9) shown in Figure 5 is placed in the base for the elevated tank (8) shown in Figure 4, then the elevated tank (10), shown in Figure 6, is placed on this base. The cover lid of the elevated tank (14), shown in Figure 7, is placed now, then the vertical cone (23), shown in Figure 8, is placed on the circular channel (2) shown in Figure 2 and it is subjected with 4 screws to the circular beam (5), which is shown in Figure 3 covering the elevated tank (10), shown in Figure 6, and covering the base of the elevated tank (8) shown in Figure 4, resting the vertical cone (23) on the supporting table (1). Now the diffuser discs (25), shown in Figure 9, are inserted on the vertical cone (23), shown in Figure 8, and the cooling coil (26), shown in Figure 10, is placed on the diffuser discs, covering the vertical cone (23) shown in Figure 8. This cooling coil (26) is connected at the bottom to one of the lines of the flow distributor (27), shown in Figure 11, and it is connected on the top to a sprinkler (30), shown in Figure 14. Now, the long ladder (28) and the short ladder (29) with the folding ring (29), shown in Figures 12 and 13, are fixed to the supporting table of the vertical cone (1), shown in Figure 1, with horseshoe-type clamps, the crosshead clamping is placed between them, and they are fixed to the ground with retained-type suspenders. The horizontal cone (37), shown in Figure 14, is installed inside the folding rings of the ladders (29). The screening system (38) is placed inside the horizontal cone (37), shown in Figure 15. The vertical cone (23), shown in Figure 8, is inserted inside the horizontal cone (37) by means of the orifice (34) shown in Figure 14. An elbow (40), as the one shown in Figure 16, is fitted internally in the outlet of the vertical cone (23), it is oriented to the narrowest part of the horizontal cone (37). It is fixed with 3 screws and another elbow (41) is fitted outwards in the narrowest part of the horizontal cone (37), as the one shown in Figure 16, a vertical discharge tube is fixated to the elbow (41). The semi-circular retainer (42) shown in Figure 17 is fixed at the widest part of the entrance to the horizontal cone (37) shown in Figure 14 and is subjected with 4 screws to close the lid of the horizontal cone shown in Figure 18. Mountings for air extractors (45), as the ones shown in Figure 22, are placed on the ladders (28) which support the horizontal cone (37), and air extractors (49), as the ones showed in Figure 23, are placed on them. Here, the extractor fitted in the widest part of the horizontal cone (37) is placed in an inverted position so that it works as an impeller. Another air extractor is placed on the ground, also in an inverted position so that it can work as an emergent impeller. Both impellers are connected to the lid of the horizontal cone (44), the air extractor in the narrowest part of the cone horizontal cone is connected with a flexible tube to the exit of the chimney (36), shown in Figure 14, which has a screening system (46) and a filter (47), as the ones shown in Figures 21 and 22, and in the external part of the chimney (36) a pulley is fitted (50), as the one shown in Figure 24, so that the filter can be changed, the flexible tube inserted in the elbow (41) of the narrowest part of the cone is placed in the storage tank for suspended particles (51) through the input duct on the storage lid (54), shown in Figure 25. Inside the storage tank for suspended particles (51) a submersible pump system is placed, as the one shown in Figure 26, also the submersible pumps (60) are placed inside the capture particles tank resting on the grill (56) shown in Figure 25. A "Y" connector (63) is connected to the hydraulic outlets (61) of each submersible pump of Figure 28 by means of the outlet (53) of the captured particle tank (51), and each "Y" connector (63) to the sprinklers network of the horizontal cone (30) and to the circular tubular sprinkler of Figure 14 by means of tubes subjected with clamps, The hydro pneumatic tank (62) of Figure 27 along with the flow distributor (27) of Figure 11 is connected to the captured particle tank (51) at the outlets (58) and (53) of Figure 25 and a line coming out of the flow distributor (27) of Figure 11 is connected to the same "Y" connectors network (63) making only one line which supplies all of the sprinklers (30) of the horizontal cone (37), and from the same flow distributor (27) a line is taken to connect the cooling coil (26) of Figure 10. The heat collector cylinder with an integrated partitions system (65) shown in Figure 29 is placed in a horizontal position in the lower part of the vertical cone (23) of Figure 8, attached to any side of the supporting table of the vertical cone (1) of Figure 1, connected in one end to an air compressor. The flow distributor (27) in Figure 11 is connected eventually to a line of the circular sprinkler (24) in Figure 8 for maintenance of the vertical cone (23). Finally, Figure 30 shows a partial view of all the equipment assembled.

The equipment works in the following way: to eliminate smoke and suspended particles, the vertical cone encloses and conducts them to the horizontal cone where they are driven through the screening system, at the same time an artificial turbulence is produced by means of the water sprinklers and air impellers the suspended particles are driven to the storage tank and simultaneously, the water is sent to the sprinklers in a cyclic way the heat of the flame and the temperature of the combustion gases is reduced when it is used to heat the elevated tank which full at 65 % of its capacity, generating steam which can be used externally for a variety of purposes and benefits. At the same time, water is driven through the coil which is on the outside of the vertical cone (23) which is supplied by the hydro pneumatic tank, which in turn is supplied by the suspended particles storage tank, the coil is supported by the heat diffuser discs. Also, the artificial turbulence in the horizontal cone lowers the temperature of the emissions. Meanwhile, the screen retains the suspended particles and is lubricated by the sprinklers. The vertical cone and the horizontal cone help to reduce the noise of the gas emanations that come out of the burner nozzle due to the circulation of the noise from the wide part of the cone to the narrow part of each cone. The ignition sphere is kept burning for security reasons, in case the burner is turned off accidentally. The circular channel with the draining pipe located on the base of the vertical cone is used to collect dripping during maintenance service. The tubular ring with the external input from the vertical cone is used to give maintenance service and to clean the vertical cone. The semicircular retainer works preventing leakages from the horizontal cone. The hydro pneumatic tank with the flow distributor has the function of recycling the air and water for all the system in a cyclic process. The heat collector cylinder (65) with an integrated partitions system is an optional device that has the function of collecting the heat generated by the flame to turn it into centrifugal force with the help ff an air compressor. The elevated tank with a tight lid has the function of producing high pressure steam which can be utilized as kinetic energy to move turbines, engines and produce electricity, or subject it to a distillation process to produce distilled water, or even to a de-ionizer to produce de-ionized, distilled water.

The advantages this Global Warming Decelerator Equipment, also called Emissions Purificator/Purifying Equipment has are the following:
The first advantage this equipment has is that it reduces the temperature of the emanations and heat radiated by the flame.
The second advantage this equipment shows is that it diminishes the intensity of the sound produced by the burning flame.
The third advantage this equipment shows is that it shuts off the heat generated by the flame and transforms it into centrifugal energy or thermal energy which can be utilized for different purposes for various uses as to move engines, power generators, clothes, cacao, corn meat, fruit vegetables and food driers, to dry car painting and dehydration of cereals and pasture and forage.
The fourth advantage of this equipment is that it eliminates the characteristic odors of emanations.
The fifth advantage this equipment shows is that it permits to utilize the captured particles industrially, as they are stored as liquid and solid waste which can be used to make toner and ink, and in the construction industry, to make bricks, asphalt emulsions as well as other uses the concentrated particles can have.
The sixth advantage of this equipment is that it is easy to assemble.
The seventh advantage of this equipment is that it can be mamufactured in different sizes, according to the needs of each particular industry.
The eighth advantage this equipment shows is that it is airborne stationary, i.e. it can be transported to be installed in any place.
The ninth advantage of this equipment is that it can capture and collect pollutant suspended particles, preventing clean air from getting polluted, suppresses outdoor fires and heat radiated into the atmosphere caused by combustion fires, decelerates global warming, suppresses the odors of combustion and auditive pollution, prevents acid rain, allows the utilization of the thermal energy in the form of steam and thermal centrifugal energy and that it reduces the temperature of combustion.

Because of the above, we can say that these characteristics of eliminating suspended particles and generating steam for different purposes have not been achieved by any other similar apparatus, avoiding outdoor extreme heat, turning pollution into clean energy as steam to produce electricity.

## Claims

1. Global Warming Decelerator Ecological Equipment, also called Emission Purifying System which is conformed by two conical sections, one of them fitted vertically and the other fitted horizontally, they are supported in an air portable metallic structure enclosing or encapsulating the combustion totally, the burning point, chimney or burner is inside the supporting table, the circular channel is placed on the supporting table of the vertical cone, then the circular beam is placed and fixed to the supporting table of the vertical cone with 4 screws, then the base for the elevated tank is introduced in the supporting table of the vertical cone leading the burner in a concentric position, the ignition sphere is placed at the base of the elevated tank and the elevated tank is placed on this base, now the lid of the elevated tank is placed and the vertical cone is placed on the circular channel and fixed with 4 screws to the circular beam covering the elevated tank and its base, now the diffuser discs are placed on the vertical cone and the cooling coil is placed covering the vertical cone on the outside, this cooling coil is connected at the bottom to a sprinkler, then the long and short ladders with the folding rings are placed and fixed to the supporting table of the vertical cone with horseshoe type clamps, a crosshead clamp is placed between them and they are fixated to the ground with retained-type suspenders, the horizontal cone is installed inside the folding rings of the ladders, the screening system is placed inside the horizontal cone, the vertical cone is inserted inside the horizontal cone by means of the orifice, an elbow is fitted internally in the outlet of the vertical cone, it is oriented to the narrowest part of the horizontal cone and is fixed with 3 screws, another elbow is fitted outwards in the narrowest part of the horizontal cone, a vertical discharge tube is fixated to the elbow. The semi-circular retainer is fixed at the widest part of the entrance of the horizontal cone and subjected with 4 screws inside the horizontal cone, the lid of the horizontal cone is now closed. Mountings for air extractors are placed on the ladders and air extractors are placed on them, the extractor fitted in the widest part of the horizontal cone is placed in an inverted position so that it works as an impeller, another air extractor is placed on the ground, also in an inverted position so that it can work as an emergent impeller. Both impellers are connected to the lid of the horizontal cone, the air extractor in the narrowest part of the cone horizontal cone is connected with a flexible tube to the exit of the chimney which leads to a screening system and a filter, in the external part of the chimney a pulley is fitted so that the filter can be changed, the flexible tube inserted in the elbow of the narrowest part of the horizontal cone is placed inside the captured particle storage tank by the duct of the input in the storage lid, inside the captured particle storage tank a system of submersible pumps is placed, also, the submersible pumps are placed inside the captures particle storage tank resting on a grill, in the hydraulic outlet of each pump is connected a "Y" connector by means of the outlet of the captured particle storage tank, and each "Y" connector is connected to the sprinkler network of the horizontal cone by means of pipes subjected with clamps, the hydro pneumatic tank with the flow distributor is connected to the captured particle storage tank in the outlets, and a line coming out of the flow distributor is connected to the same "Y" connectors network, forming only one line which supplies all of the sprinklers of the horizontal cone, from the same flow distributor is taken a line to connect the cooling coil, the heat collector cylinder with the integrated partitions system is placed in horizontal position below the vertical cone and is subjected to the supporting table of the vertical cone attached to any side of it, and it is connected on one end to an air compressor, the flow distributor is eventually connected to a line of the circular sprinkler for maintenance of the vertical cone.

2. Global Warming Decelerator Ecological Equipment, also called an Emissions Purifying System which consists of a vertical cone along with its tubular sprinkler ring with a circular channel with draining pipe with a circular beam with diffuser discs and cooling coil.

3. Global Warming Decelerator Ecological Equipment, also called an Emissions Purifying System which consists of al elevated tank with convex bottom and a bottleneck with internal and external thread and tight-fit lid with a water inlet and steam outlet for the elevated tank which consists of a lid with a wheel cap for tight-fit lock, with internal and external thread, with a water flow input system with a valve and a water volume meter and steam output system with a valve and a manometer.

4. Global Warming Decelerator Ecological Equipment, also called an Emissions Purifying System which consists of a horizontal cone which has an orifice to insert the vertical cone, a shower type sprinkler system and a ring shaped tubular sprinkler fitted in the narrow end of the horizontal cone, a screening system, a semi-circular retainer, a chimney with a screen and a filter, two directing elbows, a lightning rod, an emergency chimney with a lid and a retainer type whip, and a tight-fit lid with air inlets.

5. Global Warming Decelerator Ecological Equipment, also called an Emissions Purifying System which consists of a captured particle storage tank which consists of a tank with a lid, an exit duct for cables and hoses, a connector tube on the lid at the outlet of the horizontal cone, a liquid level peephole, a metallic grid, a maintenance stopper, an outlet for a connector of the hydro pneumatic tank and a level plug.

6. Global Warming Decelerator Ecological Equipment, also called an Emissions Purifying System which comprises a flow distributor adapted to the hydro pneumatic tank, which consists of a connector network to distribute water without loss of pressure due to the presence of multiple outlets.

7. Global Warming Decelerator Ecological Equipment, also called an Emissions Purifying System which comprises an ignition sphere which consists of a spherical canister which contains a piece made of volcanic rock or mineral coal or some other material.

8. Global Warming Decelerator Ecological Equipment, also called an Emissions Purifying System which comprises a heat collector with an integrated partitions system.
